# EUROPEAN PATENT SPECIFICATION

(11) **EP 4 383 064 B1**
(45) Date of publication and mention of the grant of the patent: **10.09.2025**
(21) Application number: 23205794.3
(22) Date of filing: 25.10.2023
(51) Int. Cl.: G06F 21/57, G06F 8/65

(54) **DATA MANAGEMENT APPARATUS, ONBOARD DEVICE UPDATE APPARATUS, AND DATA MANAGEMENT PROGRAM**
DATENVERWALTUNGSVORRICHTUNG, FAHRZEUGINTERNE VORRICHTUNGAKTUALISIERUNGSVORRICHTUNG UND DATENVERWALTUNGSPROGRAMM
APPAREIL DE GESTION DE DONNÉES, APPAREIL DE MISE À JOUR DE DISPOSITIF EMBARQUÉ ET PROGRAMME DE GESTION DE DONNÉES

(30) Priority: 07.12.2022 JP 2022195595
(43) Date of publication of application: 12.06.2024
(73) Proprietor: Suzuki Motor Corporation, Hamamatsu-shi, Shizuoka 432-8611 (JP)
(72) Inventor: ARAKI, Yuki, Hamamatsu-shi, 432-8611 (JP)
(74) Representative: Plasseraud IP

(56) References cited:
- US-B2- 11 146 401

## Description

### BACKGROUND OF THE INVENTION

### Field of the Invention

The present invention relates to a data management apparatus, an onboard device update apparatus, and a data management program.

### Description of the Related Art

In recent years, technology for transmitting and receiving data via an open communication network such as the Internet has been spreading to automobiles. Such automobiles are generally referred to as connected cars. The connected cars are more exposed or susceptible to cybersecurity threats than traditional cars. For this reason, the United Nations Economic Commission for Europe (UNECE) has formulated UN-R156 for new cars. UN-R156 is the regulation on software update.

UN-R156 requires that configuration information of the initial version and all the updated versions of software for the target system products are stored and maintained by, for example, its automobile manufacturer. When software stored in an onboard device equipped in a vehicle manufactured by an automobile manufacturer is updated, it is considered that this automobile manufacturer needs to conform the update status of the software of each onboard device, which is stored and maintained by this automobile manufacturer, to the update status of each vehicle at least by the time of execution of the next software update. A database that stores the update status and the update history of each vehicle is referred to as an individual-vehicle-information database.

In some onboard devices, their software cannot be updated directly via a communication network. In this case, the user visits a dealer store and the dealer updates the software. At this time, the update status of the software of the onboard device is transmitted from the dealer store to the individual-vehicle-information database of the automobile manufacturer, and then is stored and maintained as the update history of the software of the onboard device.

In addition, when the software of the onboard device cannot be directly updated via a communication network, there is a method for the user to manually update the software via a personal computer. In this case, the user downloads the updated version of the software from the corresponding website to the personal computer via the Internet, and then updates the software by: writing the update data of the updated version from the personal computer to a storage medium such as a USB (Universal Serial Bus) memory; and having the onboard device read in the update data from this storage medium.

[Patent Document 1] JP 2021-009654 A
[Patent Document 2] US 11 146 401 B2 discloses a method for updating software in a vehicle wherby the software update is transmitted, as well as version identification information and then a key is retrieved to authenticate the software before performing the update.

However, when the user manually updates the software of the onboard device via the personal computer in the above-described manner, change in the update status of the software of the onboard device is not reflected in the individual-vehicle-information database of the automobile manufacturer. In order to reflect the update status of the software of the onboard device in the individual-vehicle-information database, the user must visit the dealer store and report completion of the update each time when manually completing the update of the software by himself or herself.

### SUMMARY OF THE INVENTION

In view of the above-described circumstances, an object of the present invention is to provide a data management apparatus, an onboard device update apparatus, and a data management program, each of which can reflect the update status of the software of the onboard device in the individual-vehicle-information database in the update process, when real-time communication is not established between the individual-vehicle-information database and the onboard device, such as a case where the user manually updates the software of the onboard device.

To achieve the above object, an aspect of the present invention provides the data management apparatus that generates update data for updating: software configuration information stored in an onboard device equipped in a vehicle; and at least one of a program stored in the onboard device and data stored in the onboard device, the data management apparatus including: a reception device configured to be able to receive the software configuration information; an individual-vehicle-information storage device configured to store the software configuration information received by the reception device; an update storage device configured to store at least one of an update program for the onboard device and update data to be used by the onboard device; an update-data extractor configured to extract the update data including at least one of the update program and the update data to be used by the onboard device from the update storage device based on the software configuration information; an update-key appender configured to append an update key to the update data, the update key that unlocks update protection of the data, the program, and the software configuration information stored in the onboard device, when current software configuration information stored in the onboard device conforms identification information held by the update key; and a transmission device configured to be able to transmit the update data appended with the update key and new software configuration information paired with the update data. The individual-vehicle-information storage device is configured to additionally store the current software configuration information as an update history of the vehicle in an individual-vehicle-information database connected via a communication network.

To achieve the above object, an aspect of the present invention provides the onboard device update apparatus including: a reception device configured to receive an update request from a user for at least one of a program for an onboard device equipped in a vehicle and data to be used by the onboard device; a download request module configured to request the user to download current software configuration information stored in the onboard device to a storage medium when receiving the update request; an update-key conforming-check module configured to check conformity between the current software configuration information and identification information of an update key appended to update data downloaded by the user for updating at least one of the data and the program; and a software update unit configured to rewrite at least one of the program and the data with the update data when the current software configuration information conforms the identification information.

To achieve the above object, an aspect of the present invention provides the data management program that generates update data for updating: software configuration information stored in an onboard device equipped in a vehicle; and at least one of a program stored in the onboard device and data stored in the onboard device. The data management program allows a computer to perform: a reception process of receiving the software configuration information; a storage process of storing the software configuration information; an extraction process of extracting the update data including at least one of an update program for the onboard device and update data to be used by the onboard device, based on the software configuration information; an additional function of appending an update key to the update data, the update key that unlocks update protection of the data, the program, and the software configuration information stored in the onboard device, when the current software configuration information stored in the onboard device conforms identification information held by the update key; and a permission function of permitting download of the update data appended with the update key and new software configuration information paired with the update data. The data management program allows a computer to further perform an additional storage process of storing the current software configuration information as an update history of the vehicle in an individual-vehicle-information database connected via a communication network.

### EFFECT OF THE INVENTION

The present invention provides the data management apparatus, the onboard device update apparatus, and the data management program, each of which can reflect the update status of the software of the onboard device in the individual-vehicle-information database in the update process when real-time communication is not established between the individual-vehicle-information database and the onboard device.

### BRIEF DESCRIPTION OF THE DRAWINGS

Fig. 1 is a schematic configuration diagram illustrating a data management apparatus according to one embodiment, a vehicle, and their relevant devices.
Fig. 2 is a schematic configuration diagram illustrating an onboard device update apparatus according to one embodiment and an onboard device.
Fig. 3 is a sequence diagram illustrating respective operations of the data management apparatus according to the embodiment, the user, and the onboard device.

### DETAILED DESCRIPTION

Hereinbelow, embodiments of the present invention will be described by referring to the accompanying drawings.

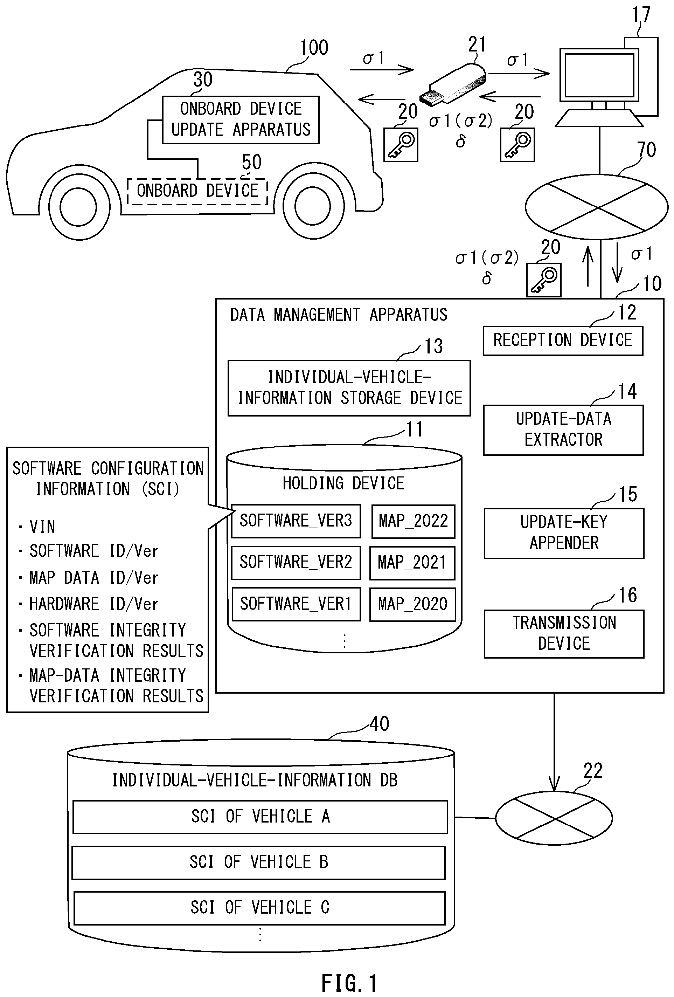

Fig. 1 is a schematic configuration diagram illustrating a data management apparatus 10 according to one embodiment, a vehicle 100, and their relevant devices.

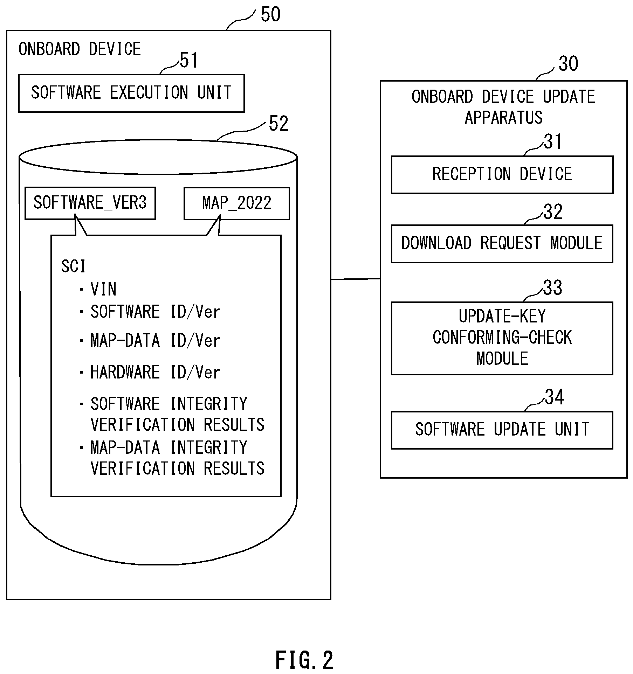

Fig. 2 is a schematic configuration diagram illustrating an onboard device 50 equipped in the vehicle 100 and an onboard device update apparatus 30.

The vehicle 100 according to the embodiment is provided with the onboard device 50, as shown in Fig. 1 and Fig. 2. The software stored in the onboard device 50 is updated with update data δ to be downloaded from the data management apparatus 10.

The onboard device 50 is an electronic device that executes software such as a car navigation system. The onboard device 50 is connected to the onboard device update apparatus 30 that assists in updating the software of this onboard device 50. Note that the onboard device update apparatus 30 may be built in the onboard device 50 or may be a device separate from the onboard device 50. When the onboard device update apparatus 30 is provided separately from the onboard device 50, the onboard device update apparatus 30 is equipped with an Electronic Control Unit (ECU) that controls components of the vehicle 100, for example. The onboard device 50 is connected to the ECU via, for example, a Controller Area Network with Flexible Data Rate (CAN-FD) bus such that information can be exchanged between both. For the convenience of description below, the onboard device 50 is assumed to be a car navigation system.

In the present embodiment including the above paragraph, the term "software" refers to "at least one of: programs; and data to be used by the onboard device 50". For example, "a software update unit 34" of Fig. 2 is a functional unit that updates at least one of: programs; and data to be used by the onboard device 50. Aspects of "programs" include, for example, system software and application software. The above-described "data to be used by the onboard device 50" are, for example, map data in the case of the car navigation system. In order to drive the vehicle under the guidance of the car navigation system that reflects the latest road conditions, it is necessary to update the map data to the latest version. In addition, individual programs separated from the data to be used by the onboard device 50 are described as "programs" so as to be distinguished from the term "software". In other words, in the following embodiment, "software update" includes: the update in which only the data are changed but not the programs; and the update in which both the programs and the data are changed.

In the following embodiment, it is assumed that direct communication is not established between the onboard device 50 and the data management apparatus 10. This is because the effects of using the data management apparatus 10, the onboard device update apparatus 30, and the data management program according to the embodiment become more remarkable when direct communication cannot be established between the onboard device 50 and the data management apparatus 10. In other words, when the onboard device 50 cannot be connected to the Internet 70, the effect of reflecting the update status of the software in the individual-vehicle-information database 40 in a series of software update operations is increased. Thus, such a situation is assumed when giving the following description. That is, in the following embodiment, the update data required for updating the software are stored in a storage medium 21 such as a USB memory and transferred between the onboard device 50 and the data management apparatus 10.

A user connects a personal computer to the data management apparatus 10 via the Internet 70. In this manner, the personal computer functions as a data-management-apparatus terminal 17. Further, the user connects the storage medium 21 to the data-management-apparatus terminal 17, has the data-management-apparatus terminal 17 read in the storage contents of the storage medium 21 and uploads this contents to the data management apparatus 10. The user also downloads the update data, which are stored in the data management apparatus 10 for updating the software, to the data-management-apparatus terminal 17 and stores them in the storage medium 21.

The case of being unconnectable to the Internet includes: a case where the onboard device 50 does not have a function enabling connection to the Internet; a case where a malfunction or failure occurs to the internet connection of the onboard device 50; and a case where the onboard device 50 are located in places where there is no radio reception, such as in the mountain.

The onboard device 50 and the onboard device update apparatus 30 will be described by using Fig. 2.

The onboard device 50 includes a software execution unit 51 and a storage device 52.

The storage device 52 stores: programs for operating the onboard device 50; map data; and software configuration information (SCI) of these programs and data.

The SCI is information that indicates combinations of the attributes of hardware, which are, for example, vehicle identification number (VIN), hardware ID, and hardware version, and the attributes of the installed software, which are, for example, a program ID and a program version, a map data ID and a map data version, program integrity verification results and map-data integrity verification results. The software execution unit 51 reads in these programs and map data from the storage device 52, and operates the onboard device 50 on the basis of the programs.

### (Onboard device Update Apparatus 30)

The onboard device update apparatus 30 includes a reception device 31, a download request module 32, an update-key conforming-check module 33, and a software update unit 34.

The reception device 31 receives an update request from the user for updating the software of the onboard device 50 equipped in the vehicle 100. In addition, the reception device 31 receives update data δ downloaded by the user for updating the software stored in the storage medium 21.

When the reception device 31 receives the update request, the download request module 32 requests the user to download the current SCI σ1from the onboard device 50. For example, the download request module 32 causes the car navigation system to display, on its display screen, a message indicating "First, press the download button on the lower right to download the current SCI". In this manner, the download request module 32 prompts the user to download the SCI σ1. The user downloads SCI σ1 to the storage medium 21.

The update-key conforming-check module 33 compares an update key 20 appended to the update data δ downloaded by the user with the current SCI σ1 stored in the onboard device 50 to check conformity between two. The update key 20 is a program that unlocks the update protection of the software of the onboard device 50 when the current SCI σ1 stored in the onboard device 50 conforms to the identification information held by the update key 20 itself. The update key 20 is appended to the desired update software downloaded from the data management apparatus 10. The identification information of the update key 20 is, for example, the current SCI σ1 appended to the update data δ downloaded from the data management apparatus 10 to the data-management-apparatus terminal 17. In this case, when the current SCI σ1 stored in the onboard device 50 conforms to the identification information held by the update key 20, the update key 20 unlocks the update protection of both the software and the SCI σ1 stored in the onboard device 50.

The identification information of the update key 20 may be the newly downloaded SCI σ2. In this case, when there is continuity between the current SCI σ1 stored in the onboard device 50 and the newly downloaded SCI σ2, the update protection of both the software and the SCI σ1 is unlocked. when the newly downloaded software is confirmed to be the proper succeeding software to the software stored in the onboard device 50, the update key 20 should be able to unlock the update protection of both the software and the SCI σ1 stored in the onboard device 50.

When the update protection of both the software and the SCI σ1 stored in the onboard device 50 is unlocked, the software update unit 34 rewrites the current software and the current SCI σ1 with the update data δ.

### (Data Management Apparatus 10)

Returning to Fig. 1, the data management apparatus 10 will be described.

The data management apparatus 10 generates the update data δ that updates both the SCI σ1 stored in the onboard device 50 equipped in the vehicle 100 and the software stored in the onboard device 50.

The data management apparatus 10 includes a holding device 11 as an update storage device, a reception device 12, an individual-vehicle-information storage device 13, an update-data extractor 14, an update-key appender 15, and a transmission device 16.

The holding device 11 stores the update software for the onboard device 50 equipped in the vehicle 100. For example, the holding device 11 stores: each version of the update program, e.g., a program_Ver1, a program_Ver2, a program_Ver3, and ...; and each year's update data, e.g., a map_2020, a map _2021, a map_2022, and ..., that may be installed in the vehicle 100. The holding device 11 also stores the SCI corresponding to each version of the program and each year's update data.

The individual-vehicle-information storage device 13 stores the current SCI σ1 of the onboard device 50 received by the reception device 12 via the data-management-apparatus terminal 17. The individual-vehicle-information storage device 13 may include an internal storage means (not shown) so that the SCI σ1 is accumulated as an update history in this storage means. Further, the individual-vehicle-information storage device 13 may: temporarily store the current SCI σ1 uploaded from the data-management-apparatus terminal 17 to the data management apparatus 10 in this storage means; and then additionally store the current SCI σ1 as an update history of the vehicle 100 in an individual-vehicle-information database 40 connected via the communication network 22. The individual-vehicle-information database 40 is hereinafter abbreviated as "the individual-vehicle-information DB 40". In the case of accumulating the history information in the individual-vehicle-information DB 40, for example, the current SCI σ1 of the vehicle 100 is transmitted to the individual-vehicle-information DB 40 once a day together with the SCI uploaded for another vehicle other than the vehicle 100.

In addition, the individual-vehicle-information storage device 13 may not have an internal storage means. In this case, the individual-vehicle-information storage device 13 should be able to transmit the uploaded SCI σ1 to the individual-vehicle-information DB 40 anytime as needed, and only the individual-vehicle-information DB 40 stores and maintains the history information of uploaded SCI σ1.

The data management apparatus 10 and the individual-vehicle-information DB 40 are communicably connected to each other via the communication network 22 including, for example a cellular network, a Wi-Fi network; the Internet, a Wide Area Network (WAN), a Local Area Network (LAN), a public line, a provider apparatus, a dedicated line, and a radio base station. The data management apparatus 10 and the individual-vehicle-information DB 40 may directly and wirelessly communicate with each other without going through the communication network 22. The individual-vehicle-information DB 40 is managed by, for example, the automobile manufacturer that manufactures the vehicle 100. It is considered that the above-described requirement of UN-R156 is satisfied by storing and managing the software update history in the individual-vehicle-information DB 40.

The update-data extractor 14 extracts the update data δ containing the update software from the holding device 11 on the basis of the SCI σ1 received by the reception device 12.

The update-key appender 15 generates the update key 20 on the basis of the SCI σ1 received by the reception device 12, and appends the update key 20 to the update data δ.

The transmission device 16 allows or enables the download of both the update data δ and the new SCI σ2 paired with the update data δ. At this time, the update data δ have already been appended with the update key 20. The reception device 12 and the transmission device 16 enable exchange of the SCI σ1 and σ2, and the update data δ between the onboard device 50 and the data management apparatus 10 via the storage medium 21.

Each of these data management apparatus 10 and onboard device update apparatus 30 can be configured as a computer that includes a processor such as a Central Processing Unit (CPU), and a storage device such as a Read Only Memory (ROM), a Random Access Memory (RAM), and a Hard Disk Drive (HDD).

In this case, the built-in functions of each component in the data management apparatus 10 and the onboard device update apparatus 30 can be achieved by causing the processor to execute predetermined programs stored in the storage device. Instead of such software processing, these functions can also be achieved by hardware such as Application Specific Integration Circuit (ASIC) and a Field-Programmable Gate Array (FPGA).

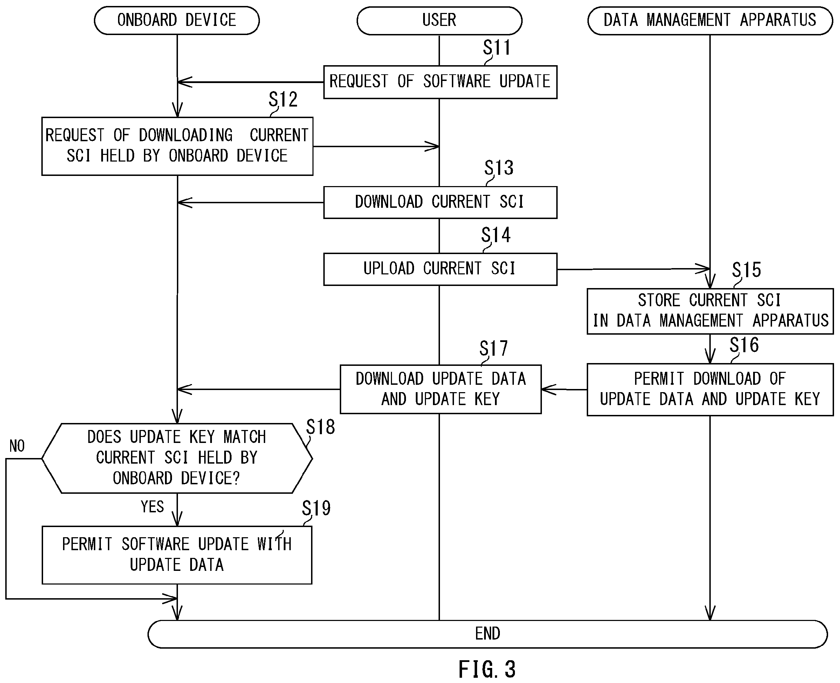

Next, the operation of each of the data management apparatus 10 according to the embodiment, the user, and the onboard device 50 will be described by using the sequence diagram of Fig. 3.

First, in the step S11, the user requests the onboard device 50 to update the software at any time the user prefers. The software update request is executed by, for example, pressing an update button provided on the onboard device 50.

In the step S12, the onboard device 50 notifies the user that the download of the SCI σ1 stored in the onboard device 50 is required for update. This notification is given by display on the display screen of the car navigation system or by voice. In other words, the onboard device 50 requests the user to download the current SCI σ1 stored in the onboard device 50.

In the step S13, the user downloads the current SCI σ1 from the onboard device 50 to the storage medium 21, and stores the current SCI σ1 in the storage medium 21.

In the step S14, the user uploads the current SCI σ1, which has been downloaded to the storage medium 21, from the data-management-apparatus terminal 17 to the data management apparatus 10. The current SCI σ1 is received by the reception device 12, and then transmitted from the reception device 12 to the update-data extractor 14, the update-key appender 15, and the individual-vehicle-information storage device 13.

In the step S15, the individual-vehicle-information storage device 13 stores the current SCI σ1 in the data management apparatus 10.

In the step S16, the update-key appender 15 generates the update key 20, and permits the download of the update data δ and the update key 20. In other words, the data management apparatus 10 has a structure in which neither the update data δ nor the update key 20 can be downloaded from the data management apparatus 10 unless the current SCI σ1 is uploaded.

In the next step S17, the user downloads the update data δ and the update key 20 from the data management apparatus 10 to the storage medium 21 and uploads the update data δ and the update key 20 from the storage medium 21 to the onboard device update apparatus 30.

When the update key 20 does not conforms to the current SCI σ1 stored in the onboard device 50 (NO in the step S18), the onboard device update apparatus 30 does not permit the software update with the update data δ (END). When the update key 20 conforms the current SCI σ1 stored in the onboard device 50 (YES in the step S18), the processing proceeds to the step S19 in which the onboard device update apparatus 30 permits the software update with the update data δ (END).

As described above, unless the current SCI σ1 stored in the onboard device 50 is uploaded, the data management apparatus 10 according to the embodiment does not permit the download of the update data δ. In addition, when the update key 20 generated simultaneously with the update data δ does not conform to the current SCI σ1, the onboard device update apparatus 30 does not permit the software update of the onboard device 50. Thus, the data management apparatus 10 can safely manage the update history even if the user does not visit the dealer store. In addition, the user can update the software of the onboard device 50 by using the storage medium 21 such as a USB memory. Hence, the data management apparatus 10 can improve user convenience. In particular, in a vehicle that cannot perform communication, the data management apparatus 10 has a large effect on improving user convenience.

While certain embodiments have been described, these embodiments have been presented by way of example only, and are not intended to limit the scope of the inventions. The scope of the invention is defined by the appended claims.

### REFERENCE SIGNS LIST

- 10: data management apparatus
- 11: holding device
- 12: reception device
- 13: individual-vehicle-information storage device
- 14: update-data extractor
- 15: update-key appender
- 16: transmission device
- 17: data-management-apparatus terminal
- 20: update key
- 21: storage medium
- 22: communication network
- 30: onboard device update apparatus
- 31: reception device
- 32: download request module
- 33: update-key conforming-check module
- 34: software update unit
- 40: individual-vehicle-information DB (database)
- 50: onboard device
- 51: software execution unit
- 52: storage device
- 70: Internet
- 100: vehicle
- δ: update data
- σ1: current software configuration information
- σ2: updated software configuration information

## Claims

1. A data management apparatus (10) that generates update data for updating: software configuration information stored in an onboard device (50) equipped in a vehicle (100); and at least one of a program stored in the onboard device (50) and data stored in the onboard device (50), the data management apparatus (10) comprising:
a reception device (12) configured to be able to receive the software configuration information;
an individual-vehicle-information storage device (13) configured to store the software configuration information received by the reception device (12);
an update storage device configured to store at least one of an update program for the onboard device (50) and update data (δ) to be used by the onboard device (50);
an update-data extractor (14) configured to extract the update data (δ) including at least one of the update program and the update data (δ) from the update storage device based on the software configuration information;
an update-key appender (15) configured to append an update key (20) to the update data (δ), the update key (20) that unlocks update protection of the data, the program, and the software configuration information stored in the onboard device (50), when current software configuration information (σ1) stored in the onboard device (50) conforms to identification information held by the update key (20); and
a transmission device (16) configured to be able to transmit the update data (δ) appended with the update key (20) and new software configuration information paired with the update data (δ),
wherein the individual-vehicle-information storage device (13) is configured to additionally store the current software configuration information (σ1) as an update history of the vehicle (100) in an individual-vehicle-information database (40) connected via a communication network (22).

2. The data management apparatus (10) according to claim 1, wherein the transmission device (16) and the reception device (12) are configured to transmit and receive the software configuration information and the update data (δ) between the onboard device (50) and the data management apparatus (10) via a storage medium (21).

3. An onboard device update apparatus (30) comprising:
a reception device (12) configured to receive an update request from a user for at least one of a program for updating an onboard device (50) equipped in a vehicle (100) and data to be used by the onboard device (50);
a download request module (32) configured to request the user to download current software configuration information (σ1) stored in the onboard device (50) to a storage medium (21) when receiving the update request;
an update-key conforming-check module (33) configured to check conformity between the current software configuration information (σ1) and identification information of an update key (20) appended to update data (δ) downloaded by the user for updating at least one of the data and the program; and
a software update unit (34) configured to rewrite at least one of the program and the data with the update data (δ) when the current software configuration information (σ1) conforms the identification information.

4. A data management program that generates update data (δ) for updating: software configuration information stored in an onboard device (50) equipped in a vehicle (100); and at least one of a program stored in the onboard device (50) and data stored in the onboard device (50), wherein the data management program allows a computer to perform:
a reception process of receiving the software configuration information;
a storage process of storing the software configuration information;
an extraction process of extracting the update data (δ) including at least one of an update program for the onboard device (50) and update data to be used by the onboard device (50), based on the software configuration information;
an additional function of appending an update key (20) to the update data (δ), the update key (20) that unlocks update protection of the data, the program, and the software configuration information stored in the onboard device (50), when the current software configuration information (σ1) stored in the onboard device (50) conforms to identification information held by the update key (20);
a permission function of permitting download of the update data (δ) appended with the update key (20) and new software configuration information paired with the update data (δ), and
an additional storage process of storing the current software configuration information (σ1) as an update history of the vehicle (100) in an individual-vehicle-information database (40) connected via a communication network (22).

## Patentansprüche

1. Datenverwaltungseinrichtung (10), welche Aktualisierungsdaten erzeugt, zum Aktualisieren von: Software-Konfigurationsinformationen, welche in einer Bordvorrichtung (50) gespeichert sind, mit welcher ein Fahrzeug (100) ausgerüstet ist; und wenigstens einem aus einem Programm, welches in der Bordvorrichtung (50) gespeichert ist, und Daten, welche in der Bordvorrichtung (50) gespeichert sind, wobei die Datenverwaltungseinrichtung (10) umfasst:
eine Empfangsvorrichtung (12), welche eingerichtet ist, um dazu in der Lage zu sein, die Software-Konfigurationsinformationen zu empfangen;
eine Individual-Fahrzeug-Informationen-Speichervorrichtung (13), welche dazu eingerichtet ist, die Software-Konfigurationsinformationen zu speichern, welche von der Empfangsvorrichtung (12) empfangen worden sind;
eine Aktualisierung-Speichervorrichtung, welche dazu eingerichtet ist, wenigstens eines aus einem Aktualisierungsprogramm für die Bordvorrichtung (50) und Aktualisierungsdaten (δ) zur Verwendung durch die Bordvorrichtung (50) zu speichern;
eine Aktualisierung-Datenextraktionseinheit (14), welche dazu eingerichtet ist, die Aktualisierungsdaten (δ), umfassend wenigstens eines aus dem Aktualisierungsprogramm und den Aktualisierungsdaten (δ) auf Grundlage der Software-Konfigurationsinformationen von der Aktualisierung-Speichervorrichtung zu extrahieren;
eine Aktualisierung-Schlüsselanfügeeinheit (15), welche dazu eingerichtet ist, einen Aktualisierungsschlüssel (20) an die Aktualisierungsdaten (δ) anzufügen, wobei der Aktualisierungsschlüssel (20) einen Aktualisierungsschutz der Daten, des Programms und der Software-Konfigurationsinformationen freischaltet, welche in der Bordvorrichtung (50) gespeichert sind, wenn gegenwärtige Software-Konfigurationsinformationen (σ1), welche in der Bordvorrichtung (50) gespeichert sind, mit Identifikationsinformationen übereinstimmen, welche der Aktualisierungsschlüssel (20) aufweist; und
eine Übertragungsvorrichtung (16), welche eingerichtet ist, um dazu in der Lage zu sein, die Aktualisierungsdaten (δ), welche an den Aktualisierungsschlüssel (20) angefügt sind und neue Software-Konfigurationsinformationen zu übertragen, welche mit den Aktualisierungsdaten (δ) gepaart sind,
wobei die Individual-Fahrzeug-Informationen-Speichervorrichtung (13) dazu eingerichtet ist, zusätzlich die gegenwärtigen Software-Konfigurationsinformationen (σ1) als eine Aktualisierungshistorie des Fahrzeugs (100) in einer Individual-Fahrzeug-Informationen-Datenbank (40) zu speichern, welche mittels eines Kommunikationsnetzwerkes (22) verbunden ist.

2. Datenverwaltungseinrichtung (10) nach Anspruch 1, wobei die Übertragungsvorrichtung (16) und die Empfangsvorrichtung (12) dazu eingerichtet sind, die Software-Konfigurationsinformationen und die Aktualisierungsdaten (δ) zwischen der Bordvorrichtung (50) und der Datenverwaltungseinrichtung (10) mittels eines Speichermediums (21) zu übertragen und zu empfangen.

3. Bordvorrichtung-Aktualisierungseinrichtung (30), umfassend:
eine Empfangsvorrichtung (12), welche dazu eingerichtet ist, für wenigstens eines aus einem Programm zum Aktualisieren einer Bordvorrichtung (50), mit welcher ein Fahrzeug (100) ausgerüstet ist, und Daten zur Verwendung durch die Bordvorrichtung (50) eine Aktualisierungsanfrage von einem Nutzer zu empfangen;
ein Herunterladen-Anfragemodul (32), welches dazu eingerichtet ist, den Nutzer anzufragen, gegenwärtige Software-Konfigurationsinformationen (σ1), welche in der Bordvorrichtung (50) gespeichert sind, auf ein Speichermedium (21) herunterzuladen, wenn die Aktualisierungsanfrage empfangen wird;
ein Aktualisierung-Schlüsselübereinstimmung-Überprüfungsmodul (33), welches dazu eingerichtet ist, eine Übereinstimmung zwischen den gegenwärtigen Software-Konfigurationsinformationen (σ1) und Identifikationsinformationen eines Aktualisierungsschlüssels (20) zu überprüfen, welcher an Aktualisierungsdaten (δ) angefügt ist, welche durch den Nutzer zum Aktualisieren wenigstens eines aus den Daten und dem Programm heruntergeladen worden sind; und
eine Software-Aktualisierungseinheit (34), welche dazu eingerichtet ist, wenigstens eines aus dem Programm und den Daten mit den Aktualisierungsdaten (δ) zu überschreiben, wenn die gegenwärtigen Software-Konfigurationsinformationen (σ1) mit den Identifikationsinformationen übereinstimmen.

4. Datenverwaltungsprogramm, welches Aktualisierungsdaten (δ) erzeugt, zum Aktualisieren von: Software-Konfigurationsinformationen, welche in einer Bordvorrichtung (50) gespeichert sind, mit welcher ein Fahrzeug (100) ausgerüstet ist; und wenigstens einem aus einem Programm, welches in der Bordvorrichtung (50) gespeichert ist, und Daten, welche in der Bordvorrichtung (50) gespeichert sind, wobei es das Datenverwaltungsprogramm einem Computer ermöglicht, folgendes durchzuführen:
einen Empfangsvorgang eines Empfangens der Software-Konfigurationsinformationen;
einen Speichervorgang eines Speicherns der Software-Konfigurationsinformationen;
einen Extraktionsvorgang eines Extrahierens der Aktualisierungsdaten (δ), umfassend wenigstens eines aus einem Aktualisierungsprogramm für die Bordvorrichtung (50) und Aktualisierungsdaten zur Verwendung durch die Bordvorrichtung (50), auf Grundlage der Software-Konfigurationsinformationen;
eine zusätzliche Funktion eines Anfügens eines Aktualisierungsschlüssels (20) an die Aktualisierungsdaten (δ), wobei der Aktualisierungsschlüssel (20) einen Aktualisierungsschutz der Daten, des Programms und der Software-Konfigurationsinformationen freischaltet, welche in der Bordvorrichtung (50) gespeichert sind, wenn gegenwärtige Software-Konfigurationsinformationen (σ1), welche in der Bordvorrichtung (50) gespeichert sind, mit Identifikationsinformationen übereinstimmen, welche der Aktualisierungsschlüssel (20) aufweist;
eine Genehmigungsfunktion eines Genehmigens eines Herunterladens der Aktualisierungsdaten (δ), welche an den Aktualisierungsschlüssel (20) angefügt sind, und neuer Software-Konfigurationsinformationen, welche mit den Aktualisierungsdaten (δ) gepaart sind,
einen zusätzlichen Speichervorgang eines Speicherns der gegenwärtigen Software-Konfigurationsinformationen (σ1) als eine Aktualisierungshistorie des Fahrzeugs (100) in einer Individual-Fahrzeug-Informationen-Datenbank (40), welche mittels eines Kommunikationsnetzwerkes (22) verbunden ist.

## Revendications

1. Appareil (10) de gestion de données qui génère des données de mise à jour pour mettre à jour : des informations de configuration logicielle stockées dans un dispositif embarqué (50) aménagé dans un véhicule (100) ; et au moins l'un parmi un programme stocké dans le dispositif embarqué (50) et des données stockées dans le dispositif embarqué (50), l'appareil (10) de gestion de données comprenant :
un dispositif de réception (12) configuré pour pouvoir recevoir les informations de configuration logicielle ;
un dispositif de stockage (13) d'informations individuelles de véhicule configuré pour stocker les informations de configuration logicielle reçues par le dispositif de réception (12) ;
un dispositif de stockage de mise à jour configuré pour stocker au moins l'un parmi un programme de mise à jour pour le dispositif embarqué (50) et des données de mise à jour (δ) à utiliser par le dispositif embarqué (50) ;
un extracteur (14) de données de mise à jour configuré pour extraire les données de mise à jour (δ) comportant au moins l'un parmi le programme de mise à jour et les données de mise à jour (δ) à partir du dispositif de stockage de mise à jour sur la base des informations de configuration logicielle ;
un dispositif de rattachement (15) de clé de mise à jour configuré pour rattacher une clé de mise à jour (20) aux données de mise à jour (δ), la clé de mise à jour (20) déverrouillant une protection de mise à jour des données, du programme et des informations de configuration logicielle stockés dans le dispositif embarqué (50), lorsque des informations de configuration logicielle actuelles (σ1) stockées dans le dispositif embarqué (50) sont conformes à des informations d'identification détenues par la clé de mise à jour (20) ; et
un dispositif d'émission (16) configuré pour pouvoir émettre les données de mise à jour (δ) rattachées à la clé de mise à jour (20) et de nouvelles informations de configuration logicielle jumelées aux données de mise à jour (δ),
dans lequel le dispositif de stockage (13) d'informations individuelles de véhicule est configuré pour stocker de plus les informations de configuration logicielle actuelles (σ1) sous forme d'un historique de mise à jour du véhicule (100) dans une base de données (40) d'informations individuelles de véhicule connectée via un réseau de communication (22).

2. Appareil (10) de gestion de données selon la revendication 1, dans lequel le dispositif d'émission (16) et le dispositif de réception (12) sont configurés pour émettre et recevoir les informations de configuration logicielle et les données de mise à jour (δ) entre le dispositif embarqué (50) et l'appareil (10) de gestion de données via un support de stockage (21).

3. Appareil (30) de mise à jour de dispositif embarqué comprenant :
un dispositif de réception (12) configuré pour recevoir une demande de mise à jour provenant d'un utilisateur pour au moins l'un parmi un programme de mise à jour d'un dispositif embarqué (50) aménagé dans un véhicule (100) et des données à utiliser par le dispositif embarqué (50) ;
un module (32) de demande de téléchargement configuré pour demander à l'utilisateur de télécharger des informations de configuration logicielle actuelles (σ1) stockées dans le dispositif embarqué (50) vers un support de stockage (21) lors de la réception de la demande de mise à jour ;
un module (33) de vérification de conformité de clé de mise à jour configuré pour vérifier une conformité entre les informations de configuration logicielle actuelles (σ1) et les informations d'identification d'une clé de mise à jour (20) rattachée à des données de mise à jour (δ) téléchargées par l'utilisateur pour mettre à jour au moins l'un parmi les données et le programme ; et
une unité (34) de mise à jour logicielle configurée pour réécrire au moins l'un parmi le programme et les données avec les données de mise à jour (δ) lorsque les informations de configuration logicielle actuelles (σ1) sont conformes aux informations d'identification.

4. Programme de gestion de données qui génère des données de mise à jour (δ) pour mettre à jour : des informations de configuration logicielle stockées dans un dispositif embarqué (50) aménagé dans un véhicule (100) ; et au moins l'un parmi un programme stocké dans le dispositif embarqué (50) et des données stockées dans le dispositif embarqué (50), dans lequel le programme de gestion de données permet à un ordinateur d'effectuer :
un processus de réception pour recevoir les informations de configuration logicielle ;
un processus de stockage pour stocker les informations de configuration logicielle ;
un processus d'extraction pour extraire les données de mise à jour (δ) comportant au moins l'un parmi un programme de mise à jour pour le dispositif embarqué (50) et des données de mise à jour à utiliser par le dispositif embarqué (50), sur la base des informations de configuration logicielle ;
une fonction supplémentaire pour rattacher une clé de mise à jour (20) aux données de mise à jour (δ), la clé de mise à jour (20) déverrouillant une protection de mise à jour des données, du programme et des informations de configuration logicielle stockés dans le dispositif embarqué (50), lorsque les informations de configuration logicielle actuelles (σ1) stockées dans le dispositif embarqué (50) sont conformes à des informations d'identification détenues par la clé de mise à jour (20) ;
une fonction d'autorisation pour autoriser un téléchargement des données de mise à jour (δ) rattachées à la clé de mise à jour (20) et de nouvelles informations de configuration logicielle jumelées aux données de mise à jour (δ), et
un processus de stockage supplémentaire pour stocker les informations de configuration logicielle actuelles (σ1) sous forme d'un historique de mise à jour du véhicule (100) dans une base de données (40) d'informations individuelles de véhicule connectée via un réseau de communication (22).
